# EUROPÄISCHE PATENTSCHRIFT

(11) **EP 2 581 883 B1**
(45) Veröffentlichungstag und Bekanntmachung des Hinweises auf die Patenterteilung: **06.09.2017**
(21) Anmeldenummer: 12188341.7
(22) Anmeldetag: 12.10.2012
(51) Int. Cl.: G07C 5/00

(54) **Datenerfassungssystem und Verfahren hierzu**
Data acquisition system and method for this
Système de saisie de données et procédé pour ce faire

(30) Priorität: 14.10.2011 DE 102011054496
(43) Veröffentlichungstag der Anmeldung: 17.04.2013
(73) Patentinhaber: Deutsches Zentrum für Luft- und Raumfahrt e.V., 51147 Köln (DE)
(72) Erfinder: Berioli, Matteo, 81373 München (DE); Plass, Simon, 82229 Seefeld (DE)
(74) Vertreter: Aisch, Sebastian

(56) Entgegenhaltungen:
- EP-A1- 1 154 388

## Beschreibung

Die Erfindung betrifft ein Datenerfassungssystem zum zentralisierten Erfassen von vorrichtungsspezifischen Daten von einer Vielzahl von zu überwachenden Vorrichtungen. Die Erfindung betrifft ebenfalls ein Verfahren zur zentralisierten Datenerfassung von vorrichtungsspezifischen Daten von einer Vielzahl von zu überwachenden Vorrichtungen.

Mit der weltweit stark zunehmenden Verbreitung von technischen Geräten und Vorrichtungen steigt auch die Menge der bei dem Betrieb oder der Überwachung dieser Vorrichtungen anfallenden vorrichtungsspezifischen Daten drastisch an. Diese von den einzelnen technischen Vorrichtungen produzierten Daten müssen in der Regel von dem Betreiber einer solchen Vorrichtung erfasst und ausgewertet werden, um beispielsweise die Vorrichtung hinsichtlich ihrer Funktionalität oder hinsichtlich des Auftretens von Fehlfunktionen überwachen zu können. Insbesondere bei dezentral verteilten Vorrichtungen stellt diese Art der Datenerfassung ein nicht unerhebliches Problem für den Betreiber derartiger Vorrichtungen dar.

So ist es beispielsweise für den Betreiber einer LKW-Flotte zum Zwecke des Flottenmanagements nicht nur wichtig zu wissen, wo und auf welchen Strecken sich der jeweilige LKW befindet. Vielmehr rücken darüber hinausgehende Daten, wie beispielsweise Spritverbrauch, Ruhezeiten, Beladungszustand oder die Kühltemperatur als zu erhebende Daten mehr und mehr in den Fokus der Überwachung. Denn erst mit Hilfe dieser Daten ist es möglich, auf spezielle Ereignisse reagieren zu können.

Ein Problem hierbei besteht in der zentralisierten Datenerfassung. Aufgrund der Tatsache, dass die zu überwachenden Vorrichtungen, wie beispielsweise ein LKW, mobil sind oder die entsprechende Vorrichtung in weit abgelegenen Gebieten steht, stellt die Datenübertragung zu einer zentralen Erfassungsstation eine nicht unerhebliche Herausforderung dar.

Am obigen Beispiel des Flottenmanagements bedeutet dies, dass die auf den einzelnen LKWs erfassten Daten an den Betreiber der Flotte gesendet werden müssen, damit diese dort zum Zwecke des Flottenmanagements entsprechend ausgewertet werden können. Hierfür ist es beispielsweise bekannt, dass die einzelnen Fahrzeuge mit einer Kommunikationseinheit ausgestattet werden, die über ein Mobilfunknetzwerk, beispielsweise GSM, zu einem Provider eine gerichtete Verbindung aufbaut, über die dann die gewünschten Daten, beispielsweise in Form einer SMS, an das zentrale Flottenmanagement übertragen werden können. Das große Problem hierbei besteht jedoch darin, dass ein entsprechendes Mobilfunknetzwerk immer in Reichweite sein muss, damit die Daten übertragbar sind. In Regionen jedoch, die eine sehr dünne Netzabdeckung aufweisen oder in denen aus umwelttechnischen Gründen ein Mobilfunknetzwerk nicht errichtet werden kann, beispielsweise auf Ozeanen, ist die Datenerfassung in dieser Form nicht sinnvoll durchführbar.

Eine andere Alternative besteht darin, die Daten über eine gerichtete Verbindung an einen Satelliten zu senden, der die empfangenen Daten dann an die gewünschte Bodenstation überträgt. Befindet sich der Satellit jedoch im geostationären Orbit (GEO, ca. 36.000 km Höhe), so bleibt zwar seine Position gegenüber einem Betrachter auf der Erde fix, wodurch eine feste Abdeckung einer bestimmten Region erreicht werden kann. Allerdings muss zum Zwecke der Datenübertragung der Sender auf dem Boden exakt auf den Satelliten ausgerichtet werden, da andernfalls eine sichere Datenübertragung nicht gewährleistet werden kann. Dies führt zu einem nicht unerheblichen technischen Mehraufwand, wodurch die Kosten derartiger Systeme sehr hoch sind.

Befindet sich der Satellit hingegen auf einer niedrigen Umlaufbahn (LEO), so bewegt sich der Satellit auf einer vordefinierten Laufbahn um die Erde. Um eine vollständige Netzabdeckung in einem bestimmten Gebiet zu erreichen, ist hierfür eine große Anzahl von Satelliten notwendig, so dass immer mindestens ein Satellit auf seiner Umlaufbahn über der entsprechenden Region ist. Die hierbei anfallenden Kosten, insbesondere für die Installation der Satelliten und die Wartung sind dabei meist wirtschaftlich nicht verhältnismäßig.

Aus der EP 1 154 388 A1 ist ein System bekannt, mit dem Daten von mobilen Vorrichtungen an eine zentrale Bodenstation übertragen werden können. Hierbei können die einzelnen mobilen Einrichtungen selber Datenübertragungsknoten darstellen, so dass mit Hilfe der mobilen Einrichtungen ein Ad-hoc-Netzwerk gebildet werden kann, um die Daten über einem gerichteten Link zur Bodenstation übertragen zu können.

Im Hinblick hierauf ist es somit Aufgabe der vorliegenden Erfindung ein verbessertes Datenerfassungssystem und ein verbessertes Verfahren zur Datenerfassung anzugeben, mit denen Daten von weit verteilten Vorrichtungen sicher und kostengünstig zentral erfasst werden können.

Die Aufgabe wird mit dem Datenerfassungssystem der eingangs genannten Art erfindungsgemäß dadurch gelöst, dass an den Vorrichtungen jeweils mindestens eine Sendeeinheit vorgesehen ist, die
- zum asynchronen Aussenden von die Daten der jeweiligen Vorrichtung enthaltenen Funksignalen im Broadcast-Verfahren eingerichtet sind,
und Relaisstationen an einer Mehrzahl von Flugzeugen angeordnet sind, die
- jeweils eine Empfangseinheit zum Empfangen der von den Sendeeinheiten der Vorrichtung asynchron ausgesendeten Funksignale aufweisen, wenn das Flugzeug im Empfangsbereich der ausgesendeten Funksignale fliegt, und
- jeweils eine Übertragungseinheit haben, die zum Übertragen der in den empfangenen Funksignalen enthaltenen Daten an mindestens eine zentrale Datenerfassungs-Bodenstation ausgebildet sind.

Eine Vorrichtung im Sinne der vorliegenden Erfindung kann dabei jeder technische Gegenstand sein, der im Hinblick auf bestimmte Eigenschaften überwacht werden soll. Dies kann beispielsweise das bereits oben beschriebene Flottenmanagementsystem und die zu überwachenden Fahrzeuge sein. Denkbar sind aber auch Anlagen, Maschinen oder Geräte, wie beispielsweise Container auf einem Frachtschiff, Getränkeautomaten, Fahrzeuge, Mauterfassungsvorrichtungen, Verkehrsampeln, Energiesysteme, Wasserstandssensoren eines Stausees oder andere Gewässer oder gar Gebäude sein. Diese Liste ist jedoch nur beispielhaft und nicht abschließend zu verstehen.

Es wird demnach ein Datenerfassungssystem zur zentralisierten Erfassung von vorrichtungsspezifischen Daten vorgeschlagen, bei dem zunächst die zu überwachenden Vorrichtungen mit jeweils mindestens einer Sendeeinheit versehen werden. Die Sendeeinheit ist dabei derart ausgebildet, dass sie die von der Vorrichtung gewünschten Daten mit Hilfe von Funksignalen asynchron und im Broadcast-Verfahren aussendet. Hierfür ist weder eine gerichtete Verbindung zu einem speziellen Empfänger noch ein entsprechend hierfür notwendiger Rückkanal notwendig.

An Flugzeugen, insbesondere an Verkehrsflugzeugen, werden nunmehr entsprechende Relaisstationen angeordnet, die über eine Empfangseinheit und eine Übertragungseinheit verfügen. Die Empfangseinheit der Relaisstationen ist derart ausgebildet, dass sie die von den Sendeeinheiten asynchron und im Broadcast-Verfahren ausgesendeten Funksignale empfangen kann, wenn sich das Flugzeug im Empfangsbereich der Sendeeinheiten der Vorrichtungen befindet, insbesondere wenn es über die Vorrichtung drüber hinweg fliegt. Die Relaisstation der Flugzeuge empfängt somit während des Fluges des Flugzeugs von seinem Start- zu seinem Zielpunkt kontinuierlich Funksignale der entsprechenden Vorrichtung und kann die in den Funksignalen enthaltenen vorrichtungsspezifischen Daten dann an eine Datenerfassungs-Bodenstation übertragen bzw. weiterleiten. Hierfür ist die Übertragungseinheit der Relaisstation entsprechend eingerichtet.

Somit wird es möglich, dass bei einer Vielzahl von dezentral verteilten Vorrichtungen die von den Vorrichtungen produzierten und gewünschten Daten zentral in einer Bodenstation erfasst werden, indem die in der entsprechenden Region fliegenden Flugzeuge diese Daten empfangen und sammeln. Die gesammelten Daten werden dann mit Hilfe einer Übertragungseinheit an die Datenerfassungs-Bodenstation weitergeleitet. Somit kann insbesondere in Regionen, wo terrestrische Mobilfunksysteme nicht vorhanden sind, kostengünstig eine Abdeckung mit Hilfe von Verkehrsflugzeugen erreicht werden. Im Gegensatz zu einer Satellitenlösung können hier erhebliche Kosten eingespart werden.

Ein weiterer Vorteil bei der Verwendung von Verkehrsflugzeugen als Relaisstationen besteht darin, dass aufgrund der Flughöhe von ca. 10.000 m ein Empfangsbereich von ca. 600 km Durchmesser abgedeckt werden kann. Dadurch kann mit einer Relaisstation ein wesentlich größeres Gebiet als mit Hilfe einer terrestrischen Bodenstation abgedeckt werden, während das Gebiet gegenüber einem Satelliten jedoch noch so klein ist, dass die Qualität der empfangenen Funksignale ausreichend ist. Denn mit zunehmender Größe des Empfangsbereiches nimmt auch die Wahrscheinlichkeit von Signalkollisionen aufgrund des asynchronen Aussendens der Signale drastisch zu, was sich letztendlich in einer geringeren Aktualisierungsrate pro Vorrichtung niederschlägt. Die Erfinder haben hierbei erkannt, dass Verkehrsflugzeuge als Relaisstationen trotz ihrer ständig wechselnden Flugbahnen, die gegenüber einem Satelliten nicht vorherberechenbar sind, aufgrund des stetig zunehmenden Luftverkehrs eine ausreichende Abdeckung mit den Empfangseinheiten bieten, so dass eine akzeptable Aktualisierungsrate der einzelnen zu überwachenden Vorrichtungen realisiert werden kann.

Ein weiterer Vorteil besteht auch darin, dass die vorhandenen Verkehrsflugzeuge schnell und einfach mit einem derartigen System nachgerüstet werden können, ohne dass die anfallenden Kosten den wirtschaftlichen Nutzen übersteigen.

Vorteilhafterweise weisen die Relaisstationen jeweils eine Recheneinheit auf, mit der die in den empfangenen Funksignalen enthaltenen Daten extrahiert werden können. Somit können die Daten bereits auf den Flugzeugen mit Hilfe der Relaisstation entsprechend vorverarbeitet werden.

Des Weiteren ist es ganz besonders vorteilhaft, wenn die Recheneinheit der Relaisstationen eine Ziel-Bodenstation aus einer Mehrzahl von Datenerfassungs-Bodenstationen auswählen kann, und zwar in Abhängigkeit von den empfangenen Daten der Vorrichtungen. Die Daten werden dann an die für die jeweiligen Daten ausgewählten Ziel-Bodenstationen weitergeleitet. Dadurch wird es möglich, dass das Flugzeug auf seinem Weg vom Start- zum Zielpunkt eine Vielzahl von vorrichtungsspezifischen Daten unterschiedlichster Vorrichtungen einsammelt und diese dann an die jeweilige Datenerfassungs-Bodenstation weiterleitet, die für die zentralisierte Erfassung der Daten der jeweiligen Vorrichtung zuständig ist. So werden beispielsweise Daten von Fahrzeugen für ein Flottenmanagement an eine andere Bodenstation übertragen als Daten von Getränkeautomaten, die dem Betreiber der Getränkeautomaten mitteilen, dass eine Ware zu neige geht. Die Relaisstation, insbesondere die Recheneinheit ist hierfür so ausgebildet, dass sie in Abhängigkeit der empfangenen Daten die gewünschte Bodenstation auswählt.

Denkbar ist aber auch, dass die Daten zunächst an eine zentrale Bodenstation übertragen werden und von dort aus an die entsprechenden gewünschten Betreiber der Vorrichtungen weitergeleitet werden.

Bevorzugterweise weisen die Relaisstationen jeweils einen Datenspeicher auf, der zum Zwischenspeichern der empfangenen Daten ausgebildet ist. Dies ist beispielsweise dann besonders sinnvoll, wenn die Relaisstation über ihre Übertragungseinheit keine Verbindung zu einer Datenerfassungs-Bodenstation aufbauen kann, da diese nicht in Übertragungsreichweite ist. In diesem Falle werden die empfangenen Daten in dem Zwischenspeicher gesammelt und dann an die Bodenstation übertragen, wenn diese in Reichweite ist.

Denkbar ist hierbei auch, dass die Relaisstationen, beispielsweise mit Hilfe ihrer Übertragungseinheiten, derart eingerichtet sind, dass die Daten nicht an eine Bodenstation direkt weitergeleitet werden, sondern zunächst an eine andere, im Empfangsbereich der Relaisstation befindliche andere Relaisstation übertragen werden. Dies könnte beispielsweise dann der Fall sein, wenn keine Datenerfassungs-Bodenstation in Reichweite ist, jedoch ein anderes Verkehrsflugzeug mit einer derartigen Relaisstation sich in Übertragungsreichweite befindet, so dass die Daten in einer Art Multi-Hopping so lange von einem Verkehrsflugzeug auf ein anderes übertragen werden, bis ein Verkehrsflugzeug bzw. seine Relaisstation in Übertragungsreichweite zu einer gewünschten Bodenstation ist.

Hierdurch wird eine Art dezentral organisiertes Kommunikationsnetzwerk realisiert, das einen nicht deterministischen Charakter aufweist.

Die Aufgabe wird im Übrigen auch mit dem Verfahren der eingangs genannten Art erfindungsgemäß gelöst durch die Schritte:
- Bereitstellen von Sendeeinheiten, die an den Vorrichtungen zum Aussenden von Funksignalen angeordnet sind,
- asynchrones Aussenden der die Daten der jeweiligen Vorrichtung enthaltenen Funksignale im Broadcast-Verfahren durch die an der jeweiligen Vorrichtung angeordneten Sendeeinheit,

- Bereitstellen von Relaisstationen, die an einer Mehrzahl von Flugzeugen angeordnet sind, wobei die Relaisstation jeweils eine Empfangseinheit und eine Übertragungseinheit aufweisen,
- Empfangen der von den Sendeeinheiten asynchron ausgesendeten Funksignale durch mindestens eine der Empfangseinheiten der jeweiligen Relaisstation, wenn das jeweilige Flugzeug im Empfangsbereich der ausgesendeten Funksignale fliegt und
- Übertragen der in den empfangenen Funksignalen enthaltenen Daten an mindestens eine zentrale Datenerfassungs-Bodenstation durch die Übertragungseinheit der jeweiligen Relaisstation.

Vorteilhafte Ausgestaltungen des Verfahrens finden sich in den entsprechenden Unteransprüchen.

Die Erfindung wird anhand der beigefügten Zeichnungen beispielhaft näher erläutert. Es zeigen:
- Figur 1 -: schematisches Blockdiagramm einer Relaisstation;
- Figur 2 -: Ausführungsbeispiel und Funktionsweise des Datenerfassungssystems.

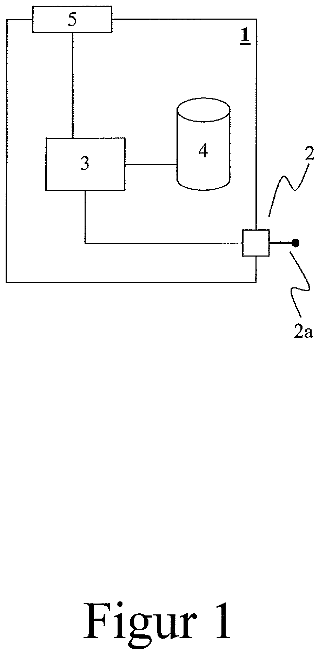

Figur 1 zeigt schematisch ein Blockdiagramm einer Relaisstation 1. Die Relaisstation 1 weist eine Empfangseinheit 2 auf, die eine entsprechende Antenne 2a zum Empfang der Funksignale hat. Die Empfangseinheit 2 ist mit einer Recheneinheit 3 elektrisch kontaktiert, durch die die empfangenen Funksignale entsprechend analysiert und bearbeitet werden können. So können mit Hilfe der Recheneinheit 3 die in den Funksignalen enthaltenen Daten extrahiert werden, um so weitere Berechnungen auf den Daten durchführen zu können.

Die Recheneinheit 3 ist des Weiteren mit einem Datenspeicher 4 verbunden, in dem die extrahierten Daten durch die Recheneinheit 3 zwischengespeichert werden können.

Die Relaisstation 1 weist des Weiteren eine Übertragungseinheit 5 auf, mit der die empfangenen oder zwischengespeicherten Daten an eine Datenerfassungs-Bodenstation weitergeleitet werden können. Dies kann beispielsweise dadurch geschehen, dass die Übertragungseinheit 5 eine gerichtete Datenverbindung mit einem Satelliten aufbaut, über den dann die Daten an die Bodenstation übertragen werden. Denkbar ist aber auch, dass die Übertragungseinheit 5 eine direkte Verbindung mit der Bodenstation, sofern sich diese in Funkreichweite befindet, aufbaut, um die Daten zentral an die Bodenstation übertragen zu können.

In einer weiteren denkbaren Ausführungsform ist die Übertragungseinheit 5 darüber hinaus so eingerichtet, dass die Übertragungseinheit 5 die Daten an eine andere Relaisstation übertragen kann, um so die zu übertragenen Daten in einer Art Multi-Hopping von einer Relaisstation eines Flugzeuges auf die Relaisstation eines anderen Flugzeuges zu übertragen, bis eine entsprechende Bodenstation in Reichweite ist. Hierfür weist die Übertragungseinheit 5 entsprechende Sende- und Empfangsmittel auf, mit der die Daten entsprechend gerichtet an die anderen Flugzeuge übertragen werden können.

Bevorzugt ist die Recheneinheit 3 so ausgebildet, dass sie anhand der Art der Daten die entsprechenden Ziel-Bodenstationen auswählt, an die die betreffenden Daten übertragen werden sollen. Dadurch kann bei einer Vielzahl von unterschiedlichen Daten, die von unterschiedlichsten Vorrichtungen und somit auch an unterschiedliche Betreiber übertragen werden sollen, die entsprechenden Empfänger bereits im Vorfeld ausgewählt und die Wege zum Empfänger verkürzt werden.

AIS-Funksignale, die von AIS-Schiffssendeeinheiten von Schiffen ausgesendet werden, können vom Empfang ausgenommen sein. Die Empfangseinheit 2 der Relaisstation 1 ist somit derart eingerichtet, dass sie derartige AIS-Funksignale nicht empfangen kann.

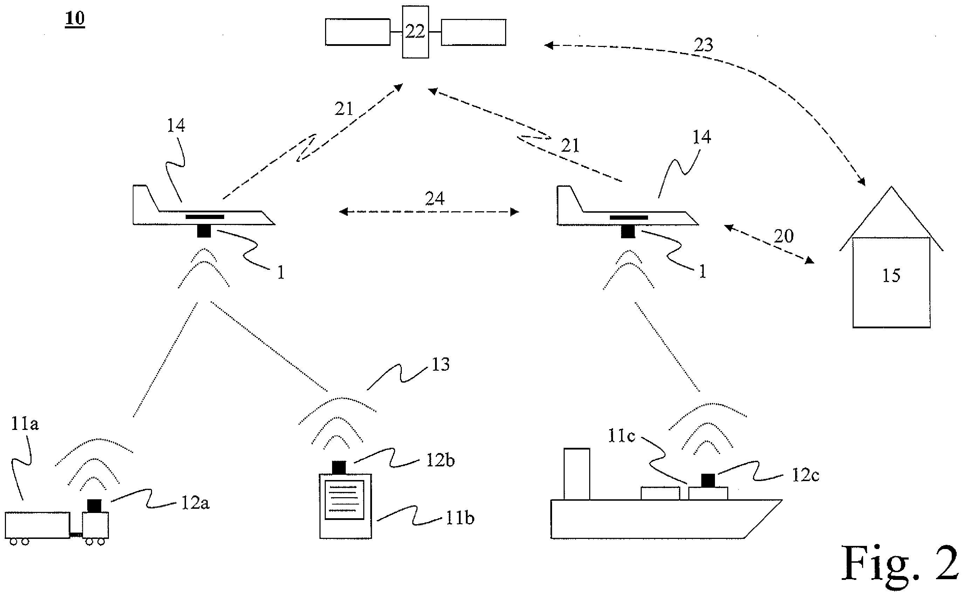

Figur 2 zeigt das grundsätzliche Prinzip des vorliegenden Datenerfassungssystems 10. An verschiedenen Vorrichtungen 11a, 11b und 11c, die im Ausführungsbeispiel der Figur 2 einen LKW 11a, einen Getränkeautomaten 11b und einen Container 11c auf einem Containerschiff darstellen. Die Vorrichtungen sind hierbei jeweils mit einer Sendeeinheit 12a, 12b und 12c ausgestattet, um entsprechende vorrichtungsspezifische Daten der Vorrichtungen 11a, 11b und 11c asynchron und im Broadcast-Verfahren aussenden können.

So ist beispielsweise die Sendeeinheit 12a mit dem Bordcomputer des LKWs 11a derart verbunden, dass der Bordcomputer entsprechende Daten des LKWs 11a mit Hilfe der Sendeeinheit 12a aussenden kann. Solche Daten können beispielsweise die Lenkzeiten, das Gewicht, den Beladungszustand oder beispielsweise die aktuelle Kühltemperatur sein. Bei dem Getränkeautomat 11b können die mit Hilfe der Sendeeinheit 12b ausgesendeten Daten beispielsweise den Füllstand darstellen, so dass der Betreiber feststellen kann, wann ein Befüllen wieder notwendig wird. Bei dem Container 11c des Containerschiffes können darüber hinaus beispielsweise Positionsangaben mit Hilfe der Sendeeinheit 12c ausgesendet werden, was besonders dann vorteilhaft ist, wenn der Container 11c aufgrund eines Unwetters über Bord gegangen ist. Denn nach wie vor sind verloren gegangene Schiffscontainer eine große Bedrohung für die Schifffahrt, da sie kaum sichtbar sind. Mit Hilfe der Sendeeinheit 12c könnte ein solcher Container beispielsweise seine Position und den Zustand des Überbordgehens aussenden, so dass andere Schiffe gewarnt oder der Betreiber seinen Container entsprechend wieder finden kann.

Die so ausgesendeten, die Daten enthaltenen Funksignale 13 werden dann von den Relaisstationen 1 über ihre Empfangseinheiten empfangen. Die Relaisstationen sind dabei an Verkehrsflugzeugen 14 angeordnet, die auf ihrem Weg zum Zielpunkt in den Empfangsbereich der Sendeeinheiten 12a, 12b und 12c gelangen. Auf ihrem Weg zum Zielpunkt sammeln die Flugzeuge 14 dabei die mittels der Funksignale 13 ausgesendeten Daten der Vorrichtungen 11a bis 11c ein und übertragen diese dann an eine Bodenstation 15.

Die Übertragung zu der zentralen Bodenstation 15 kann dabei mit Hilfe einer Kommunikationsverbindung 20 direkt erfolgen, so dass die eingesammelten Daten der Bodenstation 15 direkt zur Verfügung gestellt werden können. Bei längeren Flügen, insbesondere über weit reichende und verlassende Regionen ist es auch denkbar, dass die Flugzeuge 14 eine Datenverbindung 21 mit einem Satelliten 22 aufbauen, der dann die empfangenen Daten über eine Kommunikationsverbindung 23 an die Bodenstation 15 überträgt. Somit können die empfangenen Daten zeitnah an die Bodenstationen 15 übertragen werden.

Alternativ oder zusätzlich hierzu ist es auch denkbar, dass die Flugzeuge 14 über Möglichkeiten verfügen, die Daten von einer Relaisstation auf eine andere Relaisstation eines anderen Flugzeuges zu übertragen, so dass das zweite Flugzeug dann die Daten an die Bodenstation übertragen kann. Hierfür können zwei Flugzeuge eine Datenverbindung 24 aufbauen, um Daten untereinander austauschen zu können.

Der Vorteil eines derartigen Datenerfassungssystems 10 besteht insbesondere in der Tatsache, dass zum Einen die Sendeeinheiten 12a bis 12c sehr einfach ausgestaltet sein können, da keinerlei direkte Kommunikationsverbindung aufgebaut werden muss. Die Daten werden lediglich asynchron und im Broadcast-Verfahren ausgesendet, so dass eine Synchronisierung oder ein Handshake-Verfahren zum Verbindungsaufbau nicht notwendig sind. Die Verkehrsflugzeuge sammeln diese Daten während ihres Fluges nun ein und leiten sie dann entsprechend weiter.

## Patentansprüche

1. Datenerfassungssystem (10) zum zentralisierten Erfassen von vorrichtungsspezifischen Daten von einer Vielzahl von zu überwachenden Vorrichtungen (11a bis 11c), **dadurch gekennzeichnet, dass** an den Vorrichtungen (11a bis 11c) jeweils mindestens eine Sendeeinheit (12a bis 12c) vorgesehen sind, die
- zum asynchronen Aussenden von die Daten der jeweiligen Vorrichtung (11a bis 11c) enthaltenen Funksignalen (13) im Broadcast-Verfahren eingerichtet sind,
und Relaisstationen (1) an einer Mehrzahl von Verkehrsflugzeugen (14) angeordnet sind, die
- jeweils eine Empfangseinheit (2) zum Empfangen der von den Sendeeinheiten (12a bis 12c) der Vorrichtungen (11a bis 11c) asynchron ausgesendeten Funksignale (13) aufweisen, wenn das Verkehrsflugzeug (14) im Empfangsbereich der ausgesendeten Funksignale (13) fliegt, und
- jeweils eine Übertragungseinheit (5) haben, die zum Übertragen der in den empfangenen Funksignalen (13) enthaltenen Daten an mindestens eine zentrale Datenerfassungs-Bodenstation (15) ausgebildet sind.

2. Datenerfassungssystem (10) nach Anspruch 1, **dadurch gekennzeichnet, dass** die Relaisstationen (1) jeweils eine Recheneinheit (3) aufweisen, die zum Extrahieren der in den empfangenen Funksignalen (13) enthaltenen Daten eingerichtet sind.

3. Datenerfassungssystem (10) nach Anspruch 1 oder 2, **dadurch gekennzeichnet, dass** die Recheneinheiten (3) der Relaisstationen (1) zum Auswählen einer Ziel-Bodenstation aus einer Mehrzahl von Datenerfassungs-Bodenstationen in Abhängigkeit von den Daten ausgebildet und die Übertragungseinheiten (5) der Relaisstationen zum Übertragen der Daten an die jeweils für die Daten ausgewählten Ziel-Bodenstation eingerichtet sind.

4. Datenerfassungssystem (10) nach einem der vorhergehenden Ansprüche, **dadurch gekennzeichnet, dass** die Relaisstationen (1) jeweils einen Datenspeicher (4) aufweisen, der zum Zwischenspeichern von empfangenen Daten ausgebildet ist.

5. Datenerfassungssystem (10) nach Anspruch 4, **dadurch gekennzeichnet, dass** die Übertragungseinheiten (5) der Relaisstationen (1) zum Übertragen der in dem Datenspeicher (4) zwischengespeicherten Daten an die Datenerfassungs-Bodenstation (15) oder eine weitere Relaisstation (1) ausgebildet sind, mit der die Datenerfassungs-Bodenstation (15) oder die weitere Relaisstation (1) in Übertragungsreichweite der jeweiligen Übertragungseinheit (5) ist.

6. Datenerfassungssystem (10) nach einem der vorhergehenden Ansprüche, **dadurch gekennzeichnet, dass** die Relaisstation (1) zum Empfangen von Daten, die von anderen Relaisstationen (1) zur Übertragung an eine bevorzugte Datenerfassungs-Bodenstation ausgesendet wurden, und zum Übertragen dieser Daten an die bevorzugte Datenerfassungs-Bodenstation ausgebildet sind.

7. Verfahren zur zentralisierten Datenerfassung von vorrichtungsspezifischen Daten von einer Vielzahl von zu überwachenden Vorrichtungen, **gekennzeichnet durch** die Schritte:
- Bereitstellen von Sendeeinheiten, die an den Vorrichtungen zum Aussenden von Funksignalen angeordnet sind,
- asynchrones Aussenden der die Daten der jeweiligen Vorrichtung enthaltenen Funksignale im Broadcast-Verfahren durch die an der jeweiligen Vorrichtung angeordneten Sendeeinheit,
- Bereitstellen von Relaisstationen, die an einer Mehrzahl von Verkehrsflugzeugen angeordnet sind, wobei die Relaisstationen jeweils eine Empfangseinheit und eine Übertragungseinheit aufweisen,
- Empfangen der von den Sendeeinheiten asynchron ausgesendeten Funksignale durch mindestens eine der Empfangseinheiten der jeweiligen Relaisstation, wenn das jeweilige Verkehrsflugzeug im Empfangsbereich der ausgesendeten Funksignale fliegt, und
- Übertragen der in den empfangenen Funksignalen enthaltenen Daten an mindestens eine zentrale Datenerfassungs-Bodenstation durch die Übertragungseinheit der jeweiligen Relaisstation.

8. Verfahren nach Anspruch 7, **gekennzeichnet durch**
- Extrahieren der in den empfangenen Funksignalen enthaltenen Daten durch eine Recheneinheit der jeweiligen Relaisstation,
- Auswählen einer Ziel-Bodenstation aus einer Mehrzahl von Datenerfassungs-Bodenstation in Abhängigkeit von den extrahierten Daten durch die Recheneinheit, und
- Übertragen der Daten an die jeweils für die Daten ausgewählten Ziel-Bodenstationen durch die Übertragungseinheit der jeweiligen Relaisstation.

9. Verfahren nach Anspruch 7 oder 8, **gekennzeichnet durch** Zwischenspeichern von empfangenen Daten in einem die jeweilige Relaisstation aufweisenden Datenspeicher dann, wenn die Datenerfassungs-Bodenstation nicht in Übertragungsreichweite ist, und Übertragen der in dem Datenspeicher zwischengespeicherten Daten durch die Übertragungseinheit, wenn die Datenerfassungs-Bodenstation oder eine weitere Relaisstation in Übertragungsreichweite der Übertragungseinheit ist.

10. Verfahren nach einem der Ansprüche 7 bis 9, **gekennzeichnet durch** Empfangen von Daten, die von anderen Relaisstationen zur Übertragung an eine bevorzugte Datenerfassungs-Bodenstation ausgesendet wurden, durch die jeweilige Relaisstation und Übertragen dieser Daten an die bevorzugte Datenerfassungs-Bodenstation.

## Claims

1. Data acquisition system (10) for the centralized acquisition of apparatus-specific data from a multiplicity of apparatuses (11a to 11c) to be monitored, **characterized in that** the apparatuses (11a to 11c) each have at least one sending unit (12a to 12c) provided on them that
- are set up for asynchronously sending radio signals (13) containing the data of the respective apparatus (11a to 11c) using the broadcast method,
and relay stations (1) are arranged on a plurality of commercial aircraft (14), which
- each have a receiving unit (2) for receiving the radio signals (13) asynchronously sent by the sending units (12a to 12c) of the apparatuses (11a to 11c) when the commercial aircraft (14) flies in the reception range of the sent radio signals (13), and
- each have a transmission unit (5), which are designed for transmitting the data contained in the received radio signals (13) to at least one central data acquisition base station (15).

2. Data acquisition system (10) according to Claim 1, **characterized in that** the relay stations (1) each have a computation unit (3), which are set up for extracting the data contained in the received radio signals (13).

3. Data acquisition system (10) according to Claim 1 or 2, **characterized in that** the computation units (3) of the relay stations (1) are designed for selecting a target base station from a plurality of data acquisition base stations on the basis of the data, and the transmission units (5) of the relay stations are set up for transmitting the data to the respective target base station selected for the data.

4. Data acquisition system (10) according to one of the preceding claims, **characterized in that** the relay stations (1) each have a data memory (4) that is designed for buffer-storing received data.

5. Data acquisition system (10) according to Claim 4, **characterized in that** the transmission units (5) of the relay stations (1) are designed for transmitting the data buffer-stored in the data memory (4) to the data acquisition base station (15) or a further relay station (1) with which the data acquisition base station (15) or the further relay station (1) is in transmission range of the respective transmission unit (5).

6. Data acquisition system (10) according to one of the preceding claims, **characterized in that** the relay stations (1) are designed for receiving data that have been sent by other relay stations (1) for transmission to a preferred data acquisition base station, and for transmitting these data to the preferred data acquisition base station.

7. Method for the centralized data acquisition of apparatus-specific data from a multiplicity of apparatuses to be monitored, **characterized by** the steps of:
- provision of sending units that are arranged on the apparatuses for the purpose of sending radio signals,
- asynchronous sending of the radio signals containing the data of the respective apparatus using the broadcast method by the sending unit arranged on the respective apparatus,
- provision of relay stations that are arranged on a plurality of commercial aircraft, wherein the relay stations each have a receiving unit and a transmission unit,
- reception of the radio signals asynchronously sent by the sending units by at least one of the receiving units of the respective relay station when the respective commercial aircraft flies in the reception range of the sent radio signals, and
- transmission of the data contained in the received radio signals to at least one central data acquisition base station by the transmission unit of the respective relay station.

8. Method according to Claim 7, **characterized by**
- extraction of the data contained in the received radio signals by a computation unit of the respective relay station,
- selection of a target base station from a plurality of data acquisition base stations on the basis of the extracted data by the computation unit, and
- transmission of the data to the respective target base stations selected for the data by the transmission unit of the respective relay station.

9. Method according to Claim 7 or 8, **characterized by** buffer-storage of received data in a data memory having the respective relay station when the data acquisition base station is not in transmission range, and transmission of the data buffer-stored in the data memory by the transmission unit when the data acquisition base station or a further relay station is in transmission range of the transmission unit.

10. Method according to one of Claims 7 to 9, **characterized by** reception, by the respective relay station, of data that have been sent by other relay stations for transmission to a preferred data acquisition base station, and transmission of these data to the preferred data acquisition base station.

## Revendications

1. Système d'acquisition de données (10) destiné à l'acquisition centralisée de données spécifiques de dispositifs par une pluralité de dispositifs devant être surveillés (11a à 11c), **caractérisé en ce qu'**il est prévu sur les dispositifs (11a à 11c) respectivement au moins une unité d'émission (12a à 12c) qui
- sont conçues pour émettre de manière asynchrone des signaux radio (13) contenant les données du dispositif respectif (11a à 11c) par un processus de diffusion,
et des stations relais (1) sont disposées sur une pluralité d'avions commerciaux (14), lesquelles stations relais
- comportent respectivement une unité de réception (2) destinée à recevoir les signaux radio (13) émis de manière asynchrone par les unités d'émission (12a à 12c) des dispositifs (11a à 11c) lorsque l'avion commercial (14) vole dans la zone de réception des signaux radio émis (13) , et
- comportent respectivement une unité de transmission (5) qui est conçue pour transmettre les données contenues dans les signaux radio (13) reçus à au moins une station sol d'acquisition de données centrale (15).

2. Système d'acquisition de données (10) selon la revendication 1, **caractérisé en ce que** les stations relais (1) comportent respectivement une unité de calcul (3) qui est conçue pour extraire les données contenues dans les signaux radio (13) reçus.

3. Système d'acquisition de données (10) selon la revendication 1 ou 2, **caractérisé en ce que** les unités de calcul (3) des stations relais (1) sont conçues pour sélectionner une station sol cible parmi une pluralité de stations sol d'acquisition de données en fonction des données et les unités de transmission (5) des stations relais sont conçues pour transmettre les données à la station sol cible respective sélectionnée pour les données.

4. Système d'acquisition de données (10) selon l'une quelconque des revendications précédentes, **caractérisé en ce que** les stations relais (1) comportent respectivement une mémoire de données (4) qui est conçue pour stocker en tampon des données reçues.

5. Système d'acquisition de données (10) selon la revendication 4, **caractérisé en ce que** les unités de transmission (5) des stations relais (1) sont conçues pour transmettre les données stockées en tampon dans la mémoire de données (4) à la station sol d'acquisition de données (15) ou à une autre station relais (1), avec laquelle la station sol d'acquisition de données (15) ou l'autre station relais (1) est à portée de transmission de l'unité de transmission (5) respective.

6. Système d'acquisition de données (10) selon l'une quelconque des revendications précédentes, **caractérisé en ce que** la station relais (1) est conçue pour recevoir les données qui ont été émises par d'autres stations relais (1) pour la transmission à une station sol d'acquisition de données préférée, et pour les transmettre à la station sol d'acquisition de données préférée.

7. Procédé d'acquisition de données centralisée de données spécifiques de dispositifs par l'intermédiaire d'une pluralité de dispositifs devant être surveillés, **caractérisé par** les étapes consistant à :
- prévoir des unités d'émission qui sont disposées sur les dispositifs destinés à émettre des signaux radio,
- émettre de manière asynchrone les signaux radio contenant les données de chaque dispositif par un processus de diffusion par l'intermédiaire de l'unité d'émission disposée sur le dispositif respectif,
- prévoir des stations relais qui sont disposées sur une pluralité d'avions commerciaux, les stations relais comportant respectivement une unité de réception et une unité de transmission,
- recevoir les signaux radio émis de manière asynchrone par les unités d'émission par l'intermédiaire d'au moins l'une des unités de réception de la station relais respective lorsque l'avion commercial respectif vole dans la zone de réception des signaux radio émis, et
- transmettre les données contenues dans les signaux radio reçus à au moins une station sol d'acquisition de données centrale par l'intermédiaire de l'unité de transmission de la station relais respective.

8. Procédé selon la revendication 7, **caractérisé par** les étapes consistant à
- extraire les données contenues dans les signaux radio reçus au moyen d'une unité de calcul de la station relais respective,
- sélectionner une station sol cible parmi une pluralité de stations sol d'acquisition de données en fonction des données extraites par l'unité de calcul, et
- transmettre les données aux stations sol cibles respectivement sélectionnées pour les données par l'intermédiaire de l'unité de transmission de la station relais respective.

9. Procédé selon la revendication 7 ou 8, **caractérisé par** l'étape ne consistant à stocker en tampon des données reçues dans une mémoire de données comportant la station relais respective que lorsque la station sol d'acquisition de données n'est pas à portée de transmission, et à transmettre les données stockées en tampon dans la mémoire de données par l'intermédiaire de l'unité de transmission lorsque la station sol d'acquisition de données ou à une autre station relais se trouve à portée de transmission de l'unité de transmission.

10. Procédé selon l'une quelconque des revendications 7 à 9, **caractérisé par** l'étape consistant à recevoir des données qui ont été émises par d'autres stations relais pour leur transmission à une station sol d'acquisition de données préférée par l'intermédiaire de la station relais respective, et à transmettre lesdites données à la station sol d'acquisition de données préférée.
